# EUROPEAN PATENT APPLICATION

(11) **EP 1 449 992 A2**
(43) Date of publication of application: **25.08.2004**
(21) Application number: 04003648.5
(22) Date of filing: 18.02.2004
(51) Int. Cl.: E05B 65/19, E05B 1/00

(54) **Method of releasably securing a trunklid latch release and assembly therefor**

(30) Priority: 24.02.2003 US 373318
(71) Applicant: EATON CORPORATION, Cleveland, Ohio 44114-2584 (US)
(72) Inventor: Martus, Charles R., Oxford Michigan, 48370 (US); Loring, Scott L., Lapeer Michigan, 48446 (US)
(74) Representative: Wagner, Karl H., Dipl.-Ing.

(57) **Abstract**

A holder has one end attached to a trunklid release cable jacket preferably by weldment. The holder has a pair of spaced deflectable lugs or projections into which the cable pull handle is snapped for storage. The holder is secured to the trunk component by integrally formed clips or bayonet push-in connection and thus the handle is secured to prevent rattling.

## Description

### BACKGROUND OF THE INVENTION

In current production passenger motor vehicles it is required to provide a manual release for the trunklid or boot cover which may be activated from the interior of the trunk component. Typically, such internal trunklid latch releases employ a handle usually of a looped or T-shaped configuration attached to the end of a pull cable which has its opposite end attached to the lid latch release mechanism. The handle or loop is typically provided with a coating or layer of luminescent material which enables easy location from the interior of the compartment in the absence of any artificial illumination therein.

Known arrangements for an internal trunklid latch release include a tension or pull cable slidably received in a jacket which is connected at one end to the latch mechanism with the remote end anchored to the vehicle's trunk compartment structure and has a handle attached to the pull cable. Such arrangements have left the release handle dangling or free to move about at the end of the flexible pull cable, which has created undesirable noise from the handle rattling against the vehicle structure. Attempts have been made to solve this problem by adhesively attaching looped fabric to the handle and to the attachment structure in order that the handle may be releasably held down until needed by the user. However, this arrangement has proven difficult to install in vehicles in which the trunk compartment is not finished with interior trim panels. Accordingly, it has been desired to provide a way to releasably hold down the trunklid's latch release handle in a manner which is easy to release for the user yet is low in cost and easy to install during vehicle assembly.

### BRIEF SUMMARY OF THE INVENTION

The present invention provides a technique for securing a trunklid internal release latch handle from rattling during vehicle use and provides a holder joined to the end of the release cable jacket. The holder has deflectable portions with detent surfaces formed thereon in a manner which permits the release handle to be frictionally and releasably secured to the holder and easily removed by a user when it is desired to pull on the release cable for releasing the trunklid latch.

The holder is joined to the end of the cable jacket remote from the release latch mechanism preferably by weldment such as spin welding or sonic welding; however, it may alternatively be joined by insert molding or a bayonet push-in connection such as one of the barbed type.

The present invention thus provides a simple and low cost, easy to install holder for a trunklid internal latch release handle which stores the handle frictionally engaged to prevent rattling during vehicle operation but permit ready release of the handle when it is desired to pull on the latch release cable.

### BRIEF DESCRIPTION OF THE DRAWINGS

FIG. 1 is a perspective view of a first embodiment of the assembly of the present invention showing the release handle attached to the cable and the holder joined to the end of the cable jacket with the handle in the released position;

FIG. 2 is a view of the embodiment of FIG. 1 with the handle frictionally engaged in the stored position in the holder;

FIG. 3 is a view from the opposite end of the assembly with the handle in the stored position in the holder;

FIG. 4 is a top view of the holder of the embodiment of FIG. 1;

FIG. 5 is a front elevation view of the holder of FIG. 4;

FIG. 6 is a bottom view of the holder of FIG. 4; and,

FIG. 7 is a perspective view of another embodiment of the invention with the handle in the stored position.

### DETAILED DESCRIPTION OF THE INVENTION

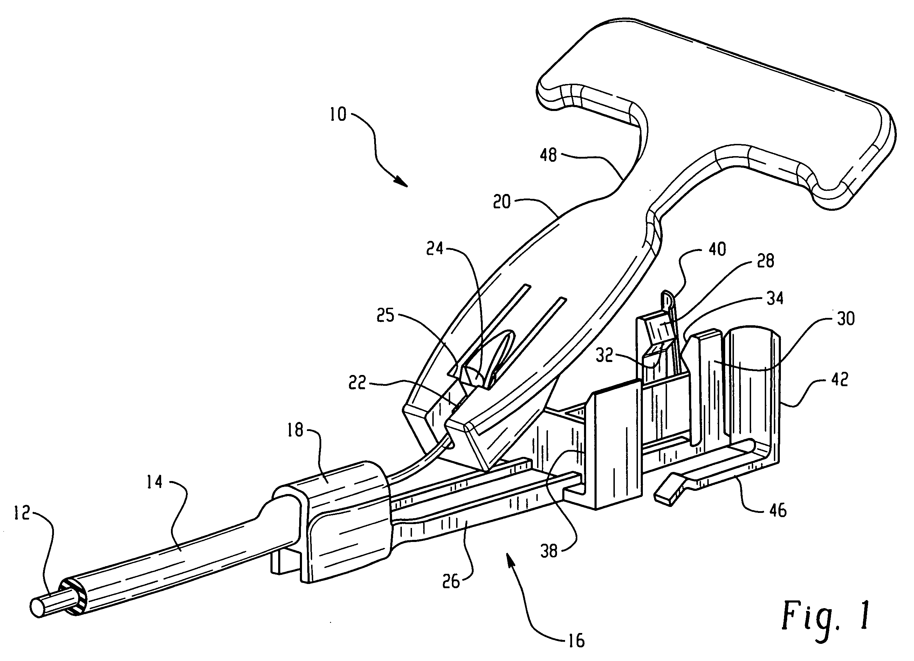

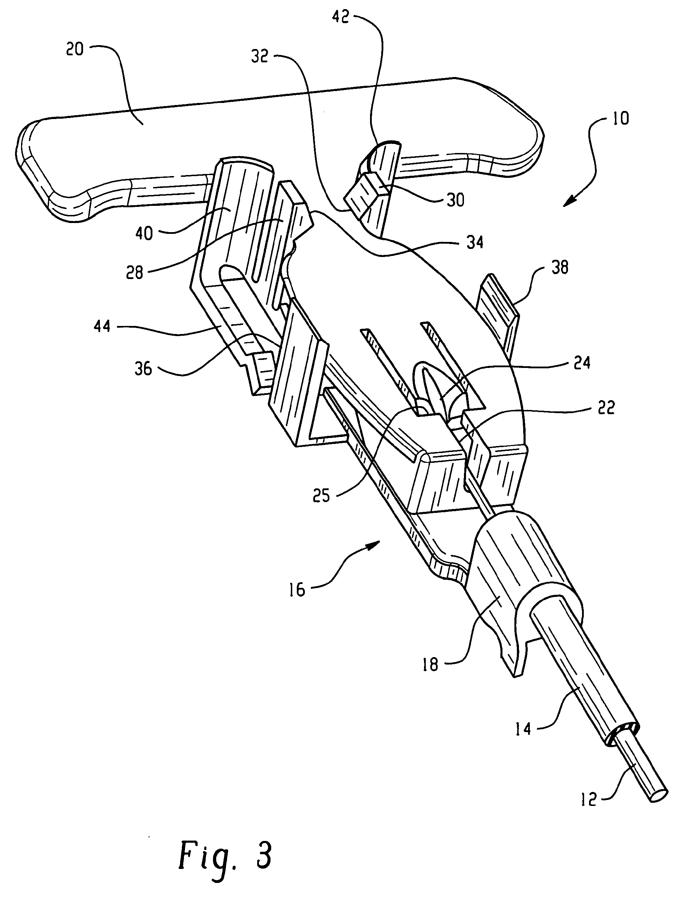

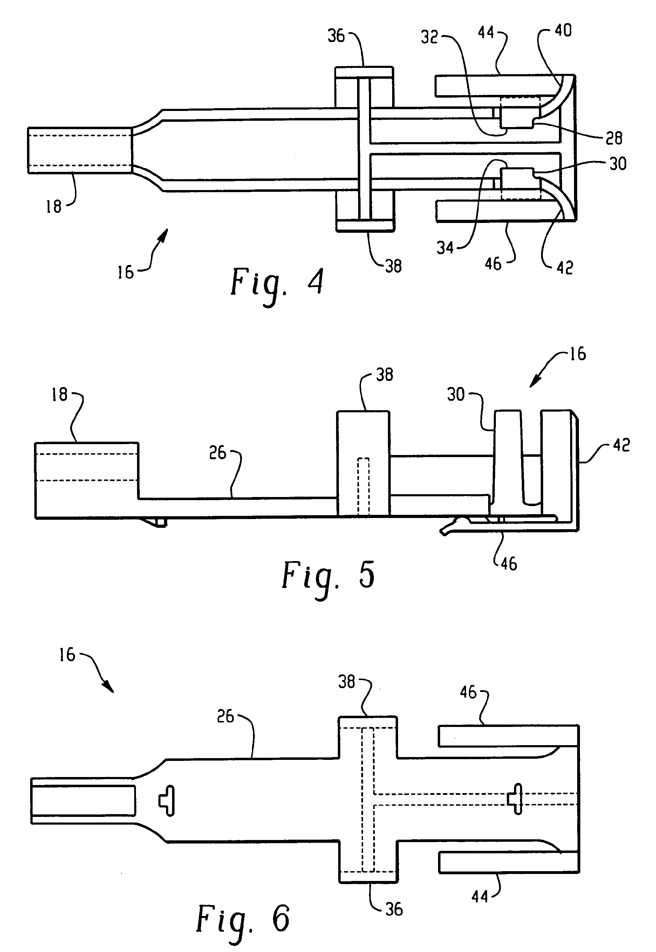

Referring to FIGS. 1 through 6, the assembly is indicated generally at 10 and includes a release cable 12 slidably received in a jacket 14 which is adapted to be connected at a remote end thereof (not shown) to a trunklid latch mechanism (not shown). The opposite or proximate end of the cable is shown joined to a holder indicated generally at 16 by encasement in a cable jacket attachment portion 18 formed at one end thereof. A handle 20 has a groove 22 formed therein into which is received the end of the cable 12 with a cable anchor or a ferrule 24 swaged onto the end of the cable 12 and received in an enlarged recess having a shoulder 25 against which the ferrule is registered when the cable is under tension by the user pulling on the handle.

The holder 16 has a base portion 26 extending from the cable jacket attachment portion 18, which base portion has at the remote end thereof a pair of generally parallel spaced tabs or stanchions 28, 30 extending upwardly therefrom which have preferably cammed detent surfaces respectively 32, 34 formed thereon. A second pair of spaced generally parallel upstanding lugs 36, 38 is provided intermediate the end portion 18 and the lugs 28, 30 with the second pair of lugs 36, 38 disposed to extend in generally the same direction as lugs 28, 30 and spaced to provide for locating the handle on the holder 16.

The end portions of the base 16 remote from portion 18 are formed at right angles thereto and in generally spaced parallel relationship to the lugs 28, 30 as denoted by reference numerals 40, 42; and, the ends have each a finger or deflectable tab 44, 46 formed thereon and extending at right angles thereto and in the direction so as to be parallel to the base 16. The projections or lugs 44, 46 are formed so as to be resiliently deflectable to permit the base 16 to be clipped over the edge of a panel forming portions of the interior of the trunk compartment.

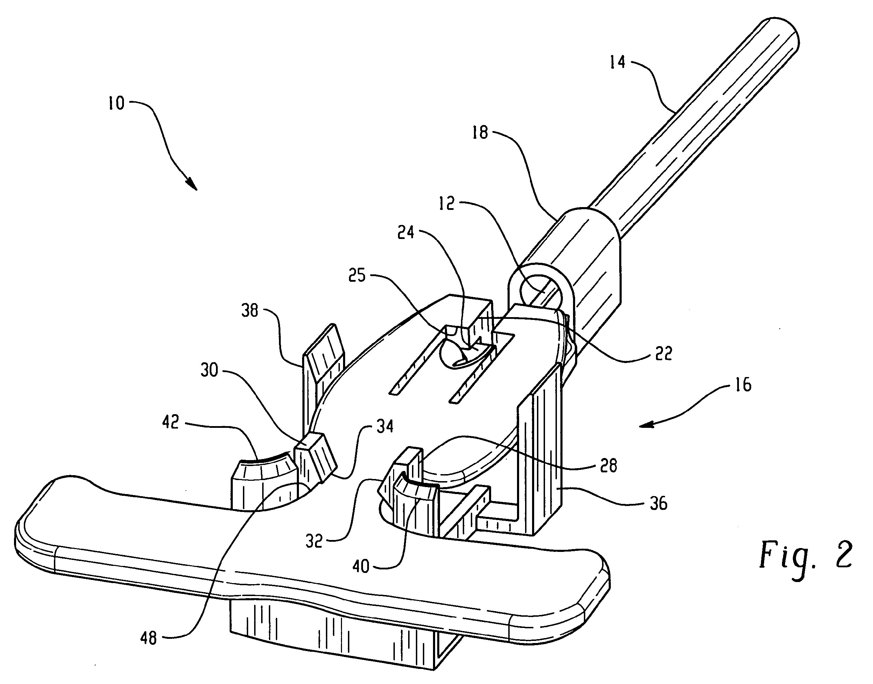

In operation, the handle 20 is moved from the position shown in FIG. 1 to the position shown in FIG. 2 in which the narrow portion 48 of the handle is brought into contact with the detent surfaces 32, 34 in camming engagement and deflects the tabs 28, 30 outwardly and snaps over the detent surfaces 32, 34 which allows lugs 28, 30 to return to their undeflected position. The handle 20 is thus retained therebetween and further guided in position by the tabs or stanchions 36, 38. The user need only pull the handle outwardly to cause portion 48 to contact the camming undersurface of the detents 32, 34 and spread the tabs 30, 32 to effect release of the handle from the holder.

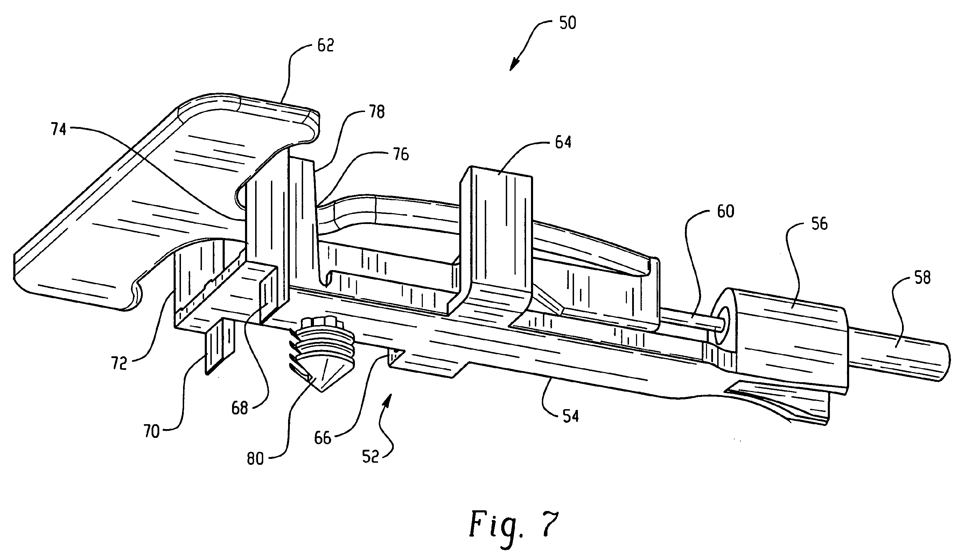

Referring to FIG. 7, another embodiment of the invention is indicated generally at 50 and has a holder indicated generally at 52 which has a base portion 54 with a cable jacket receptacle portion 56 formed at one end thereof having a cable jacket 58 received therein and joined and retained by suitable expedient such as weldment, adhesives or barbed bayonet connection. A pull cable 60 extends from the cable jacket and is secured in the end of a handle 62 in a manner similar to that of the embodiment of FIG. 1.

Holder 52 has a pair of guide lugs 64, 66 extending upwardly therefrom generally at right angles and spaced parallel arrangement. Guide lugs 64, 66 are located and spaced so as to be disposed on opposite sides of the handle 62 for locating the handle on the holder. The end of base 54 opposite the cable receiving portion 56 has a pair of downwardly extending locating projections 68, 70 formed thereon and a pair of upwardly extending stanchions or posts 72, 74 for further guiding the narrow portion or neck 76 of the handle 62. Holder base 54 also has an upstanding pair of spaced lugs or tabs disposed in spaced parallel arrangement intermediate end stanchions 72, 74, and guide lugs 64, 66, one of which is visible in FIG. 7 and denoted by reference numeral 78. It will be understood that these tabs such as 78 contained cammed detent surfaces and function in an identical manner as the tabs 28, 30 in the embodiment of FIG. 1 for frictionally engaging the neck 76 of the handle and retaining same in the stored position in the holder as shown in FIG. 7.

The bottom of the base 54, in addition to the downwardly extending locating tabs or projections 68, 70 has a barbed bayonet insert type retaining projection 80 which is adapted to be inserted in a mounting hole in the trunk compartment with the projection 68, 70 either locating against the edge of a panel or inserted into correspondingly located mounting apertures or a slot formed in the trunk compartment. It will be understood that the locating tabs 68, 70 and the barbed connector 80 replace the function of the mounting lugs 44, 46 of the embodiment of FIG. 1.

The present invention thus provides a low-cost, simple to attach and install holder for a trunk latch release cable handle for storing the handle and preventing it from rattling during normal vehicle operation, yet permitting ease of removal for operation in the event it is necessary to release the trunklid latch from inside the trunk compartment.

Although the invention has hereinabove been described with respect to the illustrated embodiments, it will be understood that the invention is capable of modification and variation and is limited only by the following claims.

## Claims

1. A method of releasably securing a vehicle trunklid latch release handle (20) comprising:
(a) attaching the handle to a release cable (12);
(b) forming a holder (16) with resiliently deflectable portions (28, 30) and a mounting portion (44, 46, 80) and releasably engaging said deflectable portions with a corresponding portion of said handle;
(c) joining the holder with a jacket (14) over the release cable; and,
(d) attaching said mounting portion to the vehicle trunk structure.

2. The method defined in claim 1, wherein said step of joining the holder to the cable jacket includes welding.

3. The method defined in claim 2, wherein said step of welding is one of welding ultrasonically and spin welding.

4. The method defined in claim 1, wherein said step of engaging said deflectable portions includes snap locking.

5. The method defined in claim 1, wherein said step of forming a holder includes forming at least one pair of spaced generally parallel lugs (28, 30).

6. The method defined in claim 1, wherein said step of forming a holder includes forming at least one pair of spaced generally parallel lugs and forming a detent surface (32, 34) on the lugs.

7. The method defined in claim 1, wherein said step of forming a holder includes forming a plurality of pairs of spaced generally parallel lugs (28, 30).

8. The method defined in claim 1, wherein said step of joining said holder includes surrounding the cable jacket.

9. The method defined in claim 1, wherein said step of attaching said mounting portion includes inserting the mounting portion in an aperture.

10. The method defined in claim 1, wherein said step of forming a mounting portion includes forming a barbed projection (80) for bayonet mounting.

11. The method defined in claim 1, wherein said step of forming a mounting portion includes forming a pair of deflectable tabs (44, 46).

12. The method defined in claim 1, wherein said step of attaching the mounting portion to the vehicle trunk includes clipping the holder on the edge of a panel.

13. The method defined in claim 1, wherein said step of attaching the mounting portion to the vehicle trunk includes a bayonet push-in engagement.

14. The method defined in claim 1, wherein said step of joining includes adhesive bonding.

15. The method defined in claim 1, wherein said step of joining includes bayonet push-in engagement.

16. The method defined in claim 1, wherein said step of joining includes insert molding.

17. In combination a release cable assembly and holder comprising:
(a) a tension cable (12) received in a jacket (14) and having one end extending out of the jacket;
(b) a handle (20) attached to the said one end of the cable;
(c) a holder (16) having a portion (18) thereof joined to said jacket and a second portion (28, 30) thereof releasably receiving said handle; and,
(d) a mounting portion (44, 46, 80) formed integrally with said holder for attachment to structure for said cable tensioning with respect thereto.

18. The combination defined in claim 17, wherein said mounting portion comprises a barbed projection (80) for bayonet mounting.

19. The combination defined in claim 17, wherein said mounting portion includes a pair of deflectable tabs (44, 46) extending from the holder for clip-on mounting.

20. The combination defined in claim 17, wherein said holder has a portion (18) thereof surrounding said jacket.

21. The combination defined in claim 17, wherein said holder portion joined to said jacket is secured thereto by weldment.

22. The combination defined in claim 17, wherein said holder portion joined to said jacket is insert molded to said jacket.
